# EUROPÄISCHE PATENTSCHRIFT

(11) **EP 1 705 769 B1**
(45) Veröffentlichungstag und Bekanntmachung des Hinweises auf die Patenterteilung: **03.06.2009**
(21) Anmeldenummer: 05450188.7
(22) Anmeldetag: 21.11.2005
(51) Int. Cl.: H02G 3/22

(54) **Vorrichtung zur Durchführung von Kabeln, Rohren u.dgl. durch Wände, Schächte u.dgl. hindurch**
Device for passing cables, conduits and the like through walls, ducts and the like
Dispositif pour faire passer des câbles, des tuyaux et autres à travers des murs, des puits et autres

(30) Priorität: 21.03.2005 AT 4832005
(43) Veröffentlichungstag der Anmeldung: 27.09.2006
(73) Patentinhaber: Döpfl, Wolfgang, 3061 Schönfeld (AT)
(72) Erfinder: Döpfl, Wolfgang, 3061 Schönfeld (AT)
(74) Vertreter: Hehenberger, Reinhard

(56) Entgegenhaltungen:
- DE-A1- 2 908 163
- US-A- 5 027 571

## Beschreibung

Die gegenständliche Erfindung betrifft eine Vorrichtung zur Durchführung von Kabeln, Rohren u.dgl. durch Wände, Schächte u.dgl. hindurch mit einem zumindest angenähert rechteckigen Tragrahmen, in welchen Packstücke aus einem elastischen Material einsetzbar sind, wobei die Packstücke mit sich über die Tiefe der Tragrahmen erstreckenden Kanälen ausgebildet sind, in welchen die Kabel, Rohre u.dgl. angeordnet sind und wobei in den Tragrahmen zwischen jeweils zwei Gruppen von nebeneinander angeordneten Packstücken eine Halteplatte eingesetzt ist, welche mit einem über den Tragrahmen hinausragenden Rand ausgebildet ist, wobei sie der Lagefixierung der einzelnen Gruppen der Packstücke dient.

Bei bekannten derartigen Vorrichtungen erfolgt die Befestigung der Packstücke innerhalb des Tragrahmens dadurch, dass zwischen die einzelnen Lagen der Packstücke jeweils eine Halteplatte eingesetzt wird und dass zwischen die letzte Halteplatte und die dieser zugewandte Innenfläche des Tragrahmens bzw. zwischen zwei voneinander im Abstand befindliche Halteplatten ein Abschlusselement eingesetzt wird, durch welches die Halteplatten und mit diesen die Packstücke in ihren Lagen fixiert werden und durch welches weiters der Tragrahmen gegenüber dem Durchtritt von Medien, insbesondere von Rauch- und Brandgasen, gesichert wird.

Hierfür besteht das Erfordernis, vor dem Einsetzen des Abschlusselementes in den Tragrahmen die aus einem elastischen Material hergestellten Packstücke zusammenzupressen, um hierdurch zu gewährleisten, dass zwischen diesen sowie zwischen den Packstücken und den anliegenden Wänden keine Spalten verbleiben, durch welche Medien, insbesondere Rauch- und Brandgase, hindurchtreten können. Sofern hierfür in den bestehenden Freiraum mindestens eine Pressspindel eingesetzt wird, wird jedoch in der Folge das Einsetzen des Abschlusselementes maßgeblich erschwert.

Aus der AT-B 391044 ist es weiters bekannt, in den bestehenden Freiraum ein keilförmiges Abschlusselement einzusetzen, ohne dass vorher die Packstücke zusammengepresst werden. Hierdurch ist jedoch nicht gewährleistet, dass die Packstücke hinreichend stark verpresst werden, um die erforderliche Abdichtung gegenüber dem Durchtritt von Medien zu erzielen. Weiters ist für die Verpressung der zwischen den einzelnen Halteplatten befindlichen Packstücke ein sehr hoher Kraftaufwand erforderlich. Anders ausgedrückt bedingt dann die zur Erzielung der angestrebten Dichtwirkung erforderliche Verpressung der Packstücke einen sehr hohen Montageaufwand.

Aus der US 5027571 A ist weiters eine derartige Vorrichtung bekannt, welche einen Tragrahmen zur Aufnahme von Packstücken und eine zwischen zwei Gruppen von Packstücken einsetzbare Halteplatte aufweist, wobei die Halteplatte an deren beiden Enden mit Randleisten ausgebildet ist, welche über den Tragrahmen hinausragen.

Um bei derartigen Vorrichtungen den Montageaufwand herabzusetzen, ist es vorgeschlagen worden, die Halteplatten dann, sobald sie mittels einer Presseinrichtung in diejenige Lagen gebracht worden sind, durch welche die erforderliche Dichtheit der Packstücke erzielt worden ist, mittels Fixierschrauben gegenüber dem Tragrahmen zu fixieren. Insoweit als dabei die Fixierung der Halteplatten gegenüber den beiden zugeordneten Außenbalken des Tragrahmens betroffen ist, ist dies ohne Schwierigkeiten durchführbar. Insoweit als jedoch der Tragrahmen mit mindestens einer dessen Innenraum unterteilenden Zwischenwand ausgebildet ist, wobei die einzelnen Lagen der Packstücke und die einzelnen Halteplatten in die durch diese Zwischenwand getrennten Räume eingesetzt sind, besteht dabei die Schwierigkeit, dass diese Zwischenwand eine zu geringe Wandstärke aufweist, dass für die beiden nebeneinander befindlichen Fixierschrauben der zwei nebeneinander angeordneten Halteplatten der erforderliche Platz zur Verfügung steht.

Der gegenständlichen Erfindung liegt somit die Aufgabe zugrunde, eine Vorrichtung zur Durchführung von Kabeln, Rohren u.dgl. zu schaffen, bei welcher nach Verpressung der Packstücke zur Erzielung der erforderlichen Dichtungswirkung gegenüber dem Durchtritt von Medien, insbesondere von Rauch- und Brandgasen, die zwischen den Packstücken befindlichen Halteplatten in ihrer Lage fixiert werden können, sodass in der Folge das Abschlusselement mit einem relativ geringen Montageaufwand eingesetzt werden kann.

Diese Aufgabe wird erfindungsgemäß dadurch gelöst, dass an den seitlichen Enden des Randes der Halteplatte jeweils ein Träger, vorzugsweise eine Traghülse, für eine Fixierschraube vorgesehen ist, wobei die Fixierschrauben mit den anliegenden Wandteilen der Tragrahmen zusammenwirken und die Achsen der Träger gegenüber den Ebenen der anliegenden Wandteile der Tragrahmen einen spitzen Winkel einschließen.

Vorzugsweise schließen die Achsen der Träger gegenüber den Ebenen der anliegenden Wandteile der Tragrahmen einen Winkel von 10° bis 60°, insbesondere einen Winkel von 20° bis 45°, vorzugsweise einen Winkel von etwa 25°, ein. Weiters können die Träger mit einem Innengewinde ausgebildet sein und können die Halteplatten an ihrer den Trägern gegenüberliegenden Seite mit mindestens einem Anschlag ausgebildet sein, welcher an die gegenüberliegenden Stirnflächen der anliegenden Wandteile der Tragrahmen zur Anlage kommen.

Vorzugweise sind die Halteplatten an beiden außerhalb der Tragrahmen befindlichen Enden mit Leisten ausgebildet, wobei an den seitlichen Enden einer dieser Leisten jeweils ein Träger, vorzugsweise eine Traghülse, für eine Fixierschraube befestigt ist und sich die seitlichen Enden der anderen Leiste über die anliegenden Wandteile der Tragrahmen hinaus erstrecken sowie an deren Stirnflächen zur Anlage bringbar sind. Weiters können die Halteplatten an ihren beiden außerhalb der Tragrahmen befindlichen Enden mit an diesen befestigten und diese verstärkenden Leisten ausgebildet sein.

Der Gegenstand der Erfindung ist nachstehend anhand eines in der Zeichnung dargestellten Ausführungsbeispieles näher erläutert. Es zeigen:
- FIG.1: eine erfindungsgemäße Vorrichtung, in axonometrischer Darstellung, und
- FIG.2: einen Bestandteil einer erfindungsgemäßen Vorrichtung, in gegenüber FIG.1 vergrößertem Maßstab, in Draufsicht.

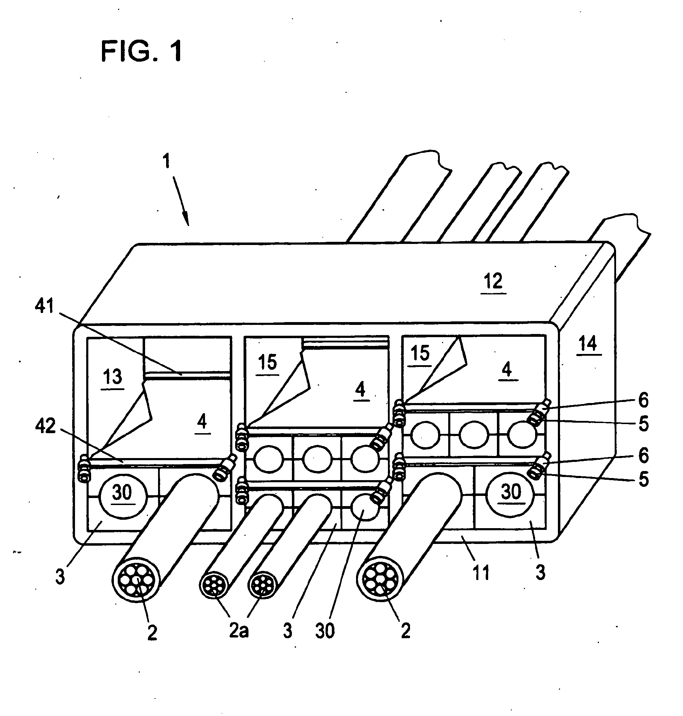

Wie dies aus FIG.1 ersichtlich ist, weist eine erfindungsgemäße Vorrichtung zur Durchführung von Kabeln, Rohren u.dgl. durch eine Wand, einen Schacht od.dgl. hindurch einen Tragrahmen 1 auf, welcher durch einen horizontalen unteren Balken 11, einen horizontalen oberen Balken 12 sowie durch zwei vertikale, seitliche Balken 13 und 14 gebildet ist. Zudem ist der Tragrahmen 1 mit zwei mittleren vertikalen Wandteilen 15 ausgebildet, durch welche der vom Tragrahmen 1 umschlossene Raum in drei Räume unterteilt ist.

Der Tragrahmen 1 dient dazu, in eine Wand, in einen Leitungsschacht u.dgl. eingesetzt zu werden, durch welche bzw. durch welchen Kabel 2, Rohre 2a od.dgl. hindurchgeführt werden, wobei diese Durchführung gegenüber dem Durchtritt von Medien, insbesondere von Rauch- und Brandgasen, gesichert sein muss. Dabei weist vorzugsweise der Rahmen 1 eine Tiefe auf, welche der Dicke der Wand u.dgl. angenähert gleich ist.

Um die angestrebte Abdichtung gegenüber dem Durchtritt von Medien zu erzielen, sind in die Tragrahmen 1 mehrere Gruppen von elastischen Packstücken 3 eingesetzt, welche mit sich über die Tiefe des Tragrahmens 1 erstreckenden Kanälen 30 ausgebildet sind, in welche die Kabel 2, Leitungen 2a usw. eingesetzt sind. Die Packstücke 3 sind insbesondere aus einem flammhemmenden Material hergestellt. Die Packstücke 3 können unterschiedliche Größen aufweisen, wobei jedoch diese Größen so gewählt sein müssen, dass durch eine Gruppe von mehreren Packstücken 3 die einzelnen Räume innerhalb des Tragrahmens über ihre Breite ausgefüllt sind.

Um die Packstücke 3 innerhalb des Tragrahmens 1 in ihren Lagen zu halten, ist jeweils oberhalb einer Gruppe von nebeneinander befindlichen Packstücken 3 bzw. zwischen zwei Gruppen von übereinander befindlichen Packstücken 3 eine Halteplatte 4 angeordnet, welche mittels zweier Fixierschrauben 5, welche in an der Halteplatte 4 befestigten Traghülsen 6 verdrehbar gehalten sind, in ihrer Lage gegenüber dem Tragrahmen 1 feststellbar ist.

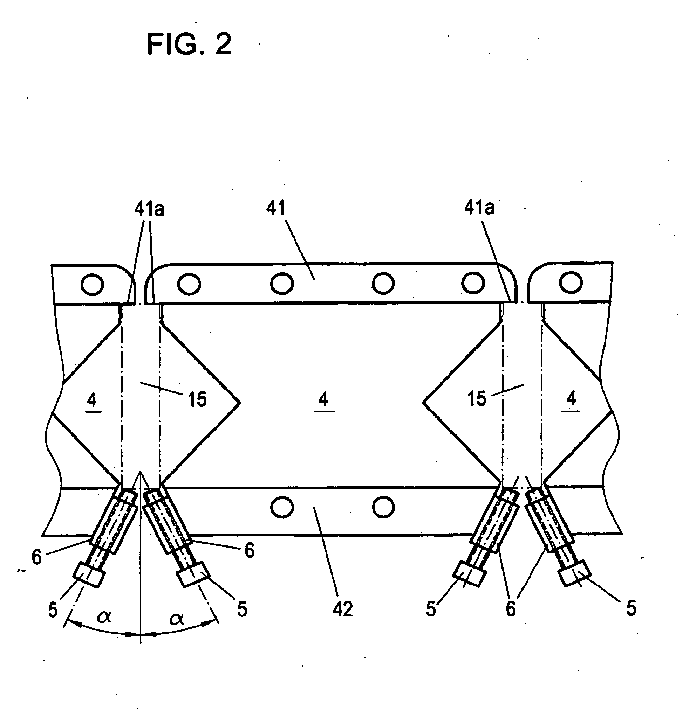

Wie dies aus FIG.2 ersichtlich ist, ist jede Halteplatte 4, welche vorzugsweise aus Stahlblech hergestellt ist, an ihren beiden Längsrändern mit diese verstärkenden Leisten 41 und 42 ausgebildet. In ihrem mittleren Bereich weist die Halteplatte 4 eine Länge auf, welche geringer ist als die lichte Weite der Teilräume. Demgegenüber weist die verstärkende Leiste 41 eine Länge auf, welche größer ist als die lichte Weite der Teilräume, wobei deren freie Enden 41a jeweils den Stirnflächen der Wandteile 15 bzw. der vertikalen Balken 13 und 14 gegenüber liegen.

An den freien Enden der verstärkenden Leiste 42 sind die Traghülsen 6 befestigt, in welchen die Fixierschrauben 5 verstellbar sind. Dabei schließen die Achsen der Traghülsen 6 mit den Längsebenen der Seitenbalken 13 und 14 bzw. der vertikalen Wandteile 15 des Tragrahmens 1 einen spitzen Winkel α von etwa 25° ein.

Die Verwendung einer erfindungsgemäßen Vorrichtung ist wie folgt:
Durch den in einer Wand, in einem Leitungskanal od.dgl. angeordneten Tragrahmen 1 sind Kabel 2, Leitungen 2a u.dgl. hindurchgeführt. Um die erforderliche Abdichtung gegenüber dem Durchtritt von Medien, insbesondere von Rauch- und Brenngasen, zu bewirken, werden auf die Kabeln 2, Leitungen 2a u.dgl. innerhalb des Tragrahmens 1 die aus zwei Teilen bestehenden Packstücke 3 aufgesetzt und in Gruppen von nebeneinander und übereinander befindlichen Packstücken 3 angeordnet. Weiters wird zwischen zwei übereinander befindlichen Gruppen von Packstücken 3 bzw. auf die oberste Gruppe von Packstücken 3 jeweils eine Halteplatte 4 aufgesetzt. Sobald sämtliche erforderlichen Packstücke 3 in den Tragrahmen 1 eingebracht worden sind, werden sie mittels einer Spindel od.dgl. verpresst, um hierdurch ein weitgehend dichtes Anliegen der Packstücke 3 aneinander sowie an die Balken 11, 13 und 14 des Tragrahmens 1 bzw. an die Zwischenwände 15 und damit der erforderlichen Dichtungswirkung zu erzielen. Um hierauf die Halteplatten 4 in dieser Lage zu fixieren, werden die Fixierschrauben 5 gegenüber den Traghülsen 6 verdreht, wodurch sie an die vorderen Stirnflächen der vertikalen Balken 13 und 14 bzw. der Wandteile 15 zur Anlage kommen. Hierdurch werden die Halteplatten 4 dahingehend verschoben, dass die von diesen seitlich abragenden Enden 41a der Leiste 41 an die hinteren Stirnflächen der vertikalen Balken 13 und 14 bzw. der Wandteile 15 zur Anlage kommen. Hierdurch werden die Halteplatten 4 in ihrer Lage fixiert, sodass die Packstücke 3 in ihrer abdichtenden Lage verbleiben. In der Folge können die erforderlichen Abschlußelemente in einfacher Weise eingesetzt und fixiert werden.

Da die Halteplatten 4 nach der Verpressung der Packstücke 3 in ihrer Lage fixiert werden, wird der beim Einsetzen der Abschlusselemente erforderliche Montageaufwand wesentlich vermindert. Da die Fixierschrauben gegenüber den Ebenen der zugeordneten Wandteilen eine Schräglage einnehmen, steht der für die Fixierschrauben erforderliche Platz zur Verfügung.

## Patentansprüche

1. Vorrichtung zur Durchführung von Kabeln (2), Rohren (2a) u.dgl. durch Wände, Schächte u.dgl. hindurch mit einem zumindest angenähert rechteckigen Tragrahmen (1), in welchen Packstücke (3) aus einem elastischen Material einsetzbar sind, wobei die Packstücke (3) mit sich über die Tiefe der Tragrahmen [1] erstreckenden Kanälen (30) ausgebildet sind, in welchen die Kabel (2), Rohre (2a) u.dgl. angeordnet sind und wobei in den Tragrahmen (1) zwischen jeweils zwei Gruppen von nebeneinander angeordneten Packstücken (3) eine Halteplatte (4) eingesetzt ist, welche mit einem über den Tragrahmen hinausragenden Rand (42) ausgebildet ist, wobei sie der Lagefixierung der einzelnen Gruppen der Packstücke (3) dient, **dadurch gekennzeichnet, dass** an den seitlichen Enden des Randes (42) der Halteplatte (4) jeweils ein Träger, insbesondere eine Traghülse (6), für eine Fixierschraube (5) vorgesehen ist, wobei die Fixierschrauben (5) mit den anliegenden Wandteilen (13,14,15) der Tragrahmen (1) zusammenwirken und die Achsen der Träger (6) gegenüber den Ebenen der anliegenden Wandteile (13,14,15) der Tragrahmen (1) einen spitzen Winkel (α) einschließen.

2. Vorrichtung nach Patentanspruch 1, **dadurch gekennzeichnet, dass** die Achsen der Träger (6) gegenüber den Ebenen der anliegenden Wandteile (13,14,15) der Tragrahmen (1) einen Winkel (α) von 10° bis 60°, insbesondere einen Winkel (α) von 20° bis 45°, vorzugsweise einen Winkel [α] von etwa 25°, einschließen.

3. Vorrichtung nach einem der Patentansprüche 1 und 2, **dadurch gekennzeichnet, dass** die Träger (6) mit einem Innengewinde ausgebildet sind und dass die Halteplatten (4) an ihrer den Trägem (6) gegenüberliegenden Seite mit mindestens einem Anschlag (41a) ausgebildet sind, welcher an die gegenüberliegenden Stirnflächen der anliegenden Wandteile (13,14,15) der Tragrahmen (1) zur Anlage kommt.

4. Vorrichtung nach einem der Patentansprüche 1 bis 3, **dadurch gekennzeichnet, dass** die Halteplatten (4) an beiden außerhalb der Tragrahmen (1) befindlichen Enden mit Leisten (41,42) ausgebildet sind, wobei an den seitlichen Enden einer dieser Leisten (42) jeweils ein Träger, insbesondere eine Traghülse (6), für eine Fixierschraube (5) befestigt ist und sich die seitlichen Enden (41a) der anderen Leiste (41) über die anliegenden Wandteile (13,14,15) der Tragrahmen (1) hinaus erstrecken und an deren Stirnflächen zur Anlage bringbar sind.

5. Vorrichtung nach Patentanspruch 4, **dadurch gekennzeichnet, dass** die Halteplatten (4) an ihren beiden außerhalb der Tragrahmen (1) befindlichen Enden mit an diesen befestigten und diese verstärkenden Leisten (41,42) ausgebildet sind.

## Claims

1. A device for passing cables (2), conduits (2a) and the like, through walls, ducts and the like, comprising an at least approximately rectangular supporting frame (1), in which packing pieces (3) made of a resilient material may be inserted, the packing pieces (3) being configured with channels (30) extending over the depth of the supporting frame (1), in which the cables (2), conduits (2a) and the like are arranged and a retaining plate (4) being inserted in the supporting frame (1) between two respective groups of packing pieces (3) arranged adjacent to one another, which is configured with an edge (42) projecting beyond the supporting frame, said retaining plate being used for fixing the position of the individual groups of packing pieces (5), **characterised in that** at the lateral ends of the edge (42) of the retaining plate (4) one respective support, in particular a supporting sleeve (6), is provided for a fixing screw (5), the fixing screws (5) cooperating with the adjacent wall parts (13, 14, 15) of the supporting frames (1), and the axes of the supports (6) relative to the planes of the adjacent wall parts (13, 14, 15) of the supporting frames (1) enclosing an acute angle (α).

2. The device according to Claim 1, **characterised in that** the axes of the supports (6) relative to the planes of the adjacent wall parts (13, 14, 15) of the supporting frames (1) enclose an angle (α) of 10° to 60°, in particular an angle (α) of 20° to 45°, preferably an angle (α) of approximately 25°.

3. The device according to one of Claims 1 and 2, **characterised in that** the supports (6) are configured with an internal thread, and **in that** the retaining plates (4) are configured on their side opposing the supports (6) with at least one stop (41a) which comes to bear against the opposing front faces of the adjacent wall parts (13, 14, 15) of the supporting frames (1).

4. The device according to one of Claims 1 to 3, **characterised in that** the retaining plates (4) are configured at both ends located outside the supporting frames (1) with strips (41, 42), one respective support, in particular a supporting sleeve (6) for a fixing screw (5), being fastened to the lateral ends of one of these strips (42), and the lateral ends (41a) of the other strip (41) extending beyond the adjacent wall parts (13, 14, 15) of the supporting frames (1) and being able to be brought to bear against the front faces thereof.

5. The device according to Claim 4, **characterised in that** the retaining plates (4) are configured at both ends thereof located outside the supporting frames (1) with strips (41, 42) fastened thereto and reinforcing said retaining plates.

## Revendications

1. Dispositif pour faire passer des câbles (2), des tuyaux (2a) et autres à travers des murs, des puits et autres, avec un cadre de support (1) au moins approximativement rectangulaire, dans lequel peuvent être insérés des pièces d'emballage (3) constituées d'un matériau élastique, les pièces d'emballage (3) étant formées avec des canaux (30) s'étendant sur la profondeur du cadre de support (1), dans lesquels sont disposés les câbles (2), les tuyaux (2a) et autres, et une plaque de maintien (4) étant installée dans le cadre de support (1), toujours entre deux groupes de pièces d'emballage (3) disposées côte à côte, qui est conçue avec un rebord (42) dépassant du cadre de support et qui sert à bloquer la position des différents groupes de pièces d'emballage (5), **caractérisé en ce qu'**à chacune des extrémités latérales du rebord (42) de la plaque de maintien (4) est prévu un support, en particulier une douille de support (6) pour une vis de fixation (5), les vis de fixation (5) agissant conjointement avec les pièces de paroi (13, 14, 15) attenantes du cadre de support (1), et les axes des supports (6) formant un angle aigu (α) par rapport aux surfaces des pièces de paroi attenantes (13, 14, 15) du cadre de support (1).

2. Dispositif selon la revendication 1, **caractérisé en ce que** les axes des supports (6) forment un angle (α) entre 10° et 60°, en particulier un angle (α) entre 20° et 45°, de préférence un angle (α) d'environ 25°, par rapport aux surfaces des pièces de paroi attenantes (13, 14, 15) du cadre de support (1).

3. Dispositif selon l'une des revendications 1 et 2, **caractérisé en ce que** les supports (6) sont conçus avec un filetage intérieur et **en ce que** les plaques de maintien (4) sont conçues avec au moins une butée (41a), sur leur côté opposé aux supports (6), sur laquelle s'appliquent les surfaces frontales opposées des pièces de paroi attenantes (13, 14, 15) du cadre de support (1).

4. Dispositif selon l'une des revendications 1 à 3, **caractérisé en ce que** les plaques de maintien (4) sont conçues avec des baguettes (41, 42) aux deux extrémités situées à l'extérieur du cadre de support (1), un support, en particulier une douille de support (6), étant fixé à chacune des extrémités latérales de l'une de ces baguettes (42), pour une vis de fixation (5), et les extrémités latérales (41a) de l'autre baguette (41) s'étendant au-delà des pièces de paroi attenantes (13, 14, 15) du cadre de support (1) et pouvant être appliquées sur les surfaces frontales de celles-ci.

5. Dispositif selon la revendication 4, **caractérisé en ce qu'**à leurs deux extrémités situées à l'extérieur du cadre de support (1), les plaques de maintien (4) sont conçues avec des baguettes (41, 42) renforçant celles-ci et étant fixées à celles-ci.
